# EUROPÄISCHE PATENTANMELDUNG

(11) **EP 0 527 309 A1**
(43) Veröffentlichungstag der Anmeldung: **17.02.1993**
(21) Anmeldenummer: 92109996.6
(22) Anmeldetag: 13.06.1992
(51) Int. Cl.: C01B 7/01, A62D 3/00

(54) **Verfahren zur abwasserfreien Aufarbeitung von Rückständen einer Chlorsilandestillation mit Salzsäure**

(30) Priorität: 13.08.1991 DE 4126670
(71) Anmelder: HÜLS AKTIENGESELLSCHAFT, D-45764 Marl (DE)
(72) Erfinder: Ruff, Klaus, W-5210 Troisdorf (DE); Falk, Bernhard, Dr., W-7888 Rheinfelden (DE)

(57) **Zusammenfassung**

Es wird ein Verfahren zur abwasserfreien Aufarbeitung von Rückständen einer Chlorsilandestillation beschrieben. Man läßt den Rückstand mit flüssiger Salzsäure unter Freisetzung von Chlorwasserstoff reagieren (2). Nach Koagulation (7) der Reaktionsmischung wird der Feststoff abgetrennt (9) und getrocknet sowie getempert (12). Die flüssigen und die kondensierten gasförmigen Bestandteile werden in das Verfahren zurückgeführt.

## Beschreibung

Gegenstand der vorliegenden Erfindung ist ein Verfahren zur abwasserfreien Aufarbeitung von Rückständen, die bei der Destillation von Chlorsilanen anfallen. Die Rückstände werden in flüssiger Phase mit Salzsäure umgesetzt. Ergebnis des Verfahrens ist ein trockener Rückstand mit geringem Gehalt an wasserlöslichem Chlorid, wie dies für eine umweltschonende Deponierung erforderlich ist.

Chlorsilane, wie Trichlorsilan und Siliciumtetrachlorid, können z. B. durch Umsetzung von Rohsilicium mit Chlor oder Chlorwasserstoff hergestellt werden. Bei ihrer industriellen Herstellung werden meistens Rohsiliciumsorten eingesetzt, deren Siliciumgehalt 85 Gew.-% und mehr beträgt. Weitere Bestandteile des Rohsiliciums sind hauptsächlich Eisen, Aluminium, Calcium und Titan, die bei der Umsetzung mit Chlor oder Chlorwasserstoff in ihre Chloride überführt werden. Außer diesen Metallchloriden fallen noch Hochsieder, wie Hexachlordisiloxan und Pentachlordisiloxan, an.

Üblicherweise werden die Rückstände destillativ von den Chlorsilanen grob abgetrennt. Je nach Destillationsbedingungen liegt der Rückstand als Suspension oder Feststoff vor, der einer gesonderten Aufarbeitung bedarf.

Sinnvollerweise wird die Destillation der Chlorsilane möglichst vollständig durchgeführt, da im Rückstand verbleibende Chlorsilane nicht mehr in Nutzprodukte umgesetzt werden und somit einen Wertverlust bedeuten. Für den Fall, daß sämtliche Rückstände als Suspension entsorgt werden, hat diese Suspension eine typische Zusammensetzung von etwa 30 bis 40 Gew.-% Aluminiumchlorid, 2 bis 3 Gew.-% Eisenchlorid, 2 bis 3 Gew.-% Titantetrachlorid, 35 bis 45 Gew.-% Hexa- und Pentachlordisiloxan, der Rest sind Siliciumtetrachlorid und etwa 1 Gew.-% Trichlorsilan. Wird eine solche Suspension vorgetrocknet, indem man die niedrigsiedenden Komponenten abdampft, z. B. kontinuierlich auf einem Schneckentrockner, hat ein solchermaßen vorgetrockneter Rückstand eine typische Zusammensetzung von etwa 80 Gew.-% Aluminium- und Eisenchlorid, 16 Gew.-% Hexa- und Pentachlordisiloxan sowie Titantetrachlorid und 4 Gew.-% Siliciumtetrachlorid.

Aus der DE-PS 21 61 641 ist bekannt, den Rückstand mit Wasserdampf unter Bildung von Chlorwasserstoff umzusetzen. Eine ausreichende Umsetzung erfolgt jedoch nur bei stöchiometrischem Wasserdampfüberschuß, so daß aus dem nicht umgesetzten Wasser eine zusätzliche Salzsäure anfällt, die entsorgt werden muß.

Zur Vermeidung des Entstehens von zusätzlicher Salzsäure wurde in der DE-PS 36 42 285 vorgeschlagen, die Hydrolyse des Rückstands in Gegenwart von zusätzlichem Chlorwasserstoff vorzunehmen und das nicht umgesetzte Wasser zu rezirkulieren. Gemäß DE-OS 37 42 614 läßt sich durch zusätzliche Behandlung mit Luft der Restchloridgehalt im Hydrolyserückstand weiter senken.

Alle diese Verfahren sind aufwendig und verursachen zum Teil Abwasser- und Abluftprobleme.

In der US-Patentschrift 4 690 810 wird ein Verfahren zur Umsetzung von Chlorsilanen mit Kalkmilch beschrieben, wobei die Chlorsilane bis zu 20 Gew.-% fein verteilte Metalle und zwischen 0,1 und 5 Gew.-% Chloride von Aluminium, Eisen und Titan enthalten. Der Chlorsilanstrom wird über ein Tauchrohr in eine Kalkmilch-Suspension mit einem pH-Wert von mindestens 9 eingeleitet, bis sich ein pH-Wert von 7 bis 8 einstellt. Da bei diesem Verfahren Calciumchlorid entsteht, wird die Entsorgungsproblematik nur auf dieses Reaktionsprodukt verlagert.

In der DE-PS 32 47 997 wird ein Verfahren zur Abgasreinigung einer Produktion von polykristallinem Silicium beschrieben, bei dem Chlorsilane aus einer Gasmischung mit Wasserstoff und Chlorwasserstoff durch gesättigte Salzsäure ausgewaschen werden. Die Hydrolyseprodukte fallen als leichtfiltrierbare Feststoffe an. Bekanntlich sind die im Abgas einer solchen Anlage enthaltenen Chlorsilane im wesentlichen Dichlorsilan und Trichlorsilan. Der Abgasstrom enthält etwa 1 g Si pro m³.

Diese Literaturstelle gibt keine Anleitung zum technischen Handeln bezüglich der Aufarbeitung von Rückständen einer Chlorsilandestillation, da nur reine gasförmige Chlorsilane, und zwar im wesentlichen Dichlorsilan und Trichlorsilan, in sehr geringer Konzentration umgesetzt werden, bei denen weder Chlordisiloxane noch Titantetrachlorid noch Aluminium- und Eisenchlorid zugegen sind, die den größten Teil des Rückstandes ausmachen. Außerdem wird kein Weg zur Behandlung des abgetrennten Hydrolyseproduktes aufgezeigt. Bringt man einen typischen Rückstand einer Destillation von Chlorsilanen, welche durch Umsetzung von Rohsilicium mit Chlor oder Chlorwasserstoff hergestellt wurden, mit Salzsäure kontinuierlich gemäß dieser Literaturstelle zum Umsatz und versucht, die Feststoffe kontinuierlich abzufiltrieren, so scheitert dieser Versuch an der Unfiltrierbarkeit einer solcherart hergestellten Reaktionsmischung.

Es bestand daher das Problem, ein Verfahren zur wirtschaftlichen Aufarbeitung von Rückständen einer Chlorsilandestillation zu finden, das einerseits einen sofort deponierbaren Abfall liefert, andererseits das in den Rückständen enthaltene Chlor vollständig ohne Bildung anderer zu entsorgender Produkte in wirtschaftlich sinnvoller Weise zurückgewinnt. Besonders vorteilhaft ist ein solches Verfahren, wenn das freigesetzte Chlor als Chlorwasserstoff erhalten wird und dieser unmittelbar wieder in den Hauptprozeß zur Hydrochlorierung von Rohsilicium eingesetzt wird.

Dieses Problem wird durch das erfindungsgemäße Verfahren gelöst, welches abwasserfrei arbeitet und dadurch gekennzeichnet ist, daß man
a) den Rückstand in flüssiger Salzsäure unter Freisetzung von Chlorwasserstoff reagieren läßt,
b) die gemäß a) entstandene Reaktionsmischung koagulieren läßt,
c) die festen Bestandteile der erhaltenen Reaktionsmischung abtrennt und die verbleibende Flüssigkeit nach a) zurückführt,
d) den in Stufe c) erhaltenen feuchten Feststoff einer Trocknung und Temperung bei einer Temperatur von mindestens 140 ^{o}C unterwirft,
e) die in Stufe d) freigesetzten gasförmigen Bestandteile einem Kondensationssystem zuführt und das Kondensat nach a) zurückleitet.

Die Hydrolysereaktion der Rückstände in flüssiger Salzsäure unter Freisetzung von gasförmigem Chlorwasserstoff kann in jedem geeigneten Reaktor durchgeführt werden. Wird die Reaktion diskontinuierlich durchgeführt, sind normale Rührkessel geeignet. Zweckmäßigerweise sind diese zur Abführung der Reaktionswärme mit einem Kühlmantel ausgerüstet. Die Reaktion sollte im Temperaturbereich unter 40 ^{o}C durchgeführt werden, um den verdampfenden Anteil der Reaktionsmischung niedrig zu halten. Sinnvollerweise wird der gasförmig freigesetzte Chlorwasserstoff mit Reaktionsmischung gewaschen, um mitgerissene Rückstandsanteile zurückzuhalten; dies geschieht in einfacher Weise durch Umpumpen der Reaktionsmischung über einen auf dem Rührkessel aufgesetzten Sprühturm. In diesen Wäscherkreislauf läßt sich im Bedarfsfall zur Beherrschung der Reaktionswärme ein zusätzlicher Wärmetauscher installieren.

Nach der Reaktion läßt man die Reaktionsmischung koagulieren, um die nachfolgende Abtrennung des gebildeten Feststoffes von der restlichen Reaktionsmischung zu erleichtern. Dazu läßt man z. B. in einfacher Weise die Reaktionsmischung absetzen. Man kann auch Koagulationshilfen einsetzen, wie SiO₂-haltige Zusätze, z. B. nicht spezifikationsgerechte hochdisperse Kieselsäure oder Ofenasche aus der Chlorsilanproduktion.

Anschließend erfolgt die Feststoffabtrennung aus der Reaktionsmischung z. B. mit einem Filter oder einer Zentrifuge. Man kann alle gängigen Apparate-Bauarten der Flüssig-Fest-Trennung einsetzen. Der Einsatz einer Zentrifuge ist besonders vorteilhaft, weil bei hohen Schleuderzahlen Teile der Salzsäure verdampfen, wodurch der später erhaltene Abfall unter sonst gleichen Aufarbeitungsbedingungen einen niedrigeren Restchloridgehalt aufweist. Die abgetrennte Flüssigkeit wird gesammelt und erneut für die Reaktion mit frischem Rückstand eingesetzt.

Der abgetrennte feuchte Feststoff wird anschließend bei erhöhter Temperatur getempert. Dazu kann der feuchte Feststoff in einen Mischer gebracht werden, in dem die Temperung bei Temperaturen oberhalb 140 ^{o}C unter Umwälzung des Feststoffes durchgeführt wird. Dabei entweichen gasförmige Bestandteile, die einem Kondensationssystem zugeführt werden. Das erhaltene Kondensat wird wieder für die Umsetzung von frischem Rückstand in die Hydrolysestufe zurückgeführt. Die Temperung im Mischapparat kann im diskontinuierlichen oder kontinuierlichen Betrieb erfolgen. Dazu können alle gängigen Apparatetypen, wie sie aus der Trocknungstechnik bekannt sind, eingesetzt werden.

Die Temperbedingungen bestimmen weitgehend den Restchloridgehalt des Abfalls. Weitere Einflußfaktoren auf den Restchloridgehalt sind die Bedingungen, unter denen der Feststoff aus der Reaktionsmischung abgetrennt wird, und die Konzentration des eingebrachten Rückstandes in der Reaktionsmischung. Geringeren Restchloridgehalt im Abfall erhält man unter sonst gleichen Bedingungen durch Zentrifugieren des Feststoffes aus der Reaktionsmischung anstatt durch Filtern, durch niedrige Konzentration des eingebrachten Rückstandes in der rückgeführten Salzsäure bei der Reaktion und durch hohe Temperatur während der Temperung sowie durch längere Temperzeiten. Um wirtschaftlich zu bleiben, wird man die Reaktion bei Konzentrationen von 200 bis 300 g Rückstand pro Liter Salzsäure durchführen und die Temperzeit auf 1 bis 2 Stunden begrenzen.

Der Hydrolyserückstand ist nach der Temperung deponiefähig. Die Technische Anleitung Sonderabfall in der Bundesrepublik Deutschland fordert für die oberirdisch abzulagernden Abfälle einen Höchstwert von 6 Gew.-% Chlorid. Diese Forderung wird erfüllt, wenn der Hydrolyserückstand 1 Stunde lang bei 200 ^{o}C getempert wird. Will man den Hydrolyserückstand in eine höherwertige Abfallstufe einordnen, so kann man z.B. bei 2 Stunden Temperzeit bei einer Temperatur von 300 ^{o}C Restchloridwerte unter 1 Gew.-% erhalten.

Die Erfindung wird nachfolgend anhand des beigefügten Verfahrensschemas und der Beispiele erläutert.

Vorgetrockneter Rückstand oder Rückstandssuspension wird über Leitung 1 in einen Rührbehälter 2 eindosiert, in den zuvor rezirkulierte Salzsäure über Leitung 3 eingefüllt wurde. Die Reaktionsmischung wird während der Hydrolyse über einen externen Wärmetauscher und einen auf dem Rührbehälter angeordneten Sprühturm umgepumpt. Der gebildete Chlorwasserstoff entweicht über Leitung 4 zu einem mit Kühlsole betriebenen Kühler 5. Der trockene Chlorwasserstoff verläßt über Leitung 10 die Aufarbeitungsanlage, eventuell im Kühler 5 anfallendes Kondensat fließt über Leitung 8 in einen Sammelbehälter 6.

Nach der Reaktion wird die Reaktionsmischung über Leitung 17 in den Behälter 7 gepumpt, in dem durch Stehenlassen der Suspension die Koagulation stattfindet. Anschließend wird der Behälterinhalt von 7 unter mäßigem Rühren resuspendiert und über eine Zentrifuge 9 aufgetrennt. Das Filtrat läuft über Leitung 11 in den Sammelbehälter 6, während der feuchte Feststoff einem Mischer 12 zugeführt wird, in dem die Temperung stattfindet. Die bei der Temperung freigesetzten gasförmigen Bestandteile werden durch Leitung 13 zum Kühler 16 geleitet; anfallendes Kondensat fließt über Leitung 8 in den Sammelbehälter 6. Der trockene Feststoff wird über Leitung 14 dem Mischer entnommen.

Das bei der Hydrolyse verbrauchte Wasser kann über Leitung 15 ergänzt werden. Dazu kann Wasser allein oder als Salzsäure zugeführt werden. Bei Zuführung von Salzsäure läßt sich diese in wirtschaftlicher Weise zu Chlorwasserstoff aufkonzentrieren.

Das erfindungsgemäße Verfahren wird üblicherweise bei Normaldruck durchgeführt. Je nach den Anforderungen an den entstehenden Chlorwasserstoff und an den Hydrolyserückstand kann es vorteilhaft sein, einzelne Verfahrensschritte bei erhöhtem oder vermindertem Druck durchzuführen.

### Beispiel 1

In ein Gefäß mit 1 Liter Salzsäure, die aus vorangegangenen Versuchen abfiltriert wurde, werden 200 g Rückstandsuspension eingerührt. Nach Stehenlassen der Reaktionsmischung über Nacht wird auf einem Druckfilter filtriert, und man erhält 584 g feuchten Filterkuchen. Dieser wird 2 Stunden lang bei 160 ^{o}C getempert, wonach der Restchloridgehalt der trockenen Probe 8,1 Gew.-% beträgt. Bei einer Temperung von 2 Stunden bei 230 ^{o}C erhält man 2,8 Gew.-% Chlorid im trockenen Abfall.

Wiederholt man den Versuch mit einer Konzentration von 300 g Rückstand pro Liter rezirkulierte Salzsäure, so erhält man unter sonst gleichen Bedingungen 11,4 Gew.-% Chlorid bei 160 ^{o}C und 3,2 Gew.-% bei 230 ^{o}C.

### Beispiel 2

Die Hydrolyse wird mit einer Konzentration von 200 g vorgetrocknetem Rückstand pro Liter rezirkulierte Salzsäure durchgeführt und die Reaktionsmischung 4 Stunden stehengelassen. Nach Abfiltrieren auf einem Druckfilter werden 502 g feuchter Filterkuchen erhalten. Wird der feuchte Filterkuchen bei 200 ^{o}C getempert, mißt man nach Temperzeiten von 15 bzw. 30 bzw. 60 bzw. 120 Minuten in der getrockneten Probe einen Chloridgehalt von 20,6 Gew.-% bzw. 11,6 Gew.-% bzw. 5,2 Gew.-% bzw. 3,2 Gew.-%.

Führt man die Temperung bei 230 ^{o}C durch, erhält man für die genannten Temperzeiten Chloridwerte von 16,9 Gew.-% bzw. 5,9 Gew.-% bzw. 3,0 Gew.-% bzw. 2,2 Gew.-%.

Steigert man die Temperatur während der Temperung auf 300 ^{o}C, stellen sich in der getrockneten Probe Chloridgehalte von 5,7 Gew.-% bzw. 2,0 Gew.-% bzw. 1,2 Gew.-% bzw. 0,8 Gew.-% ein.

### Beispiel 3

Der Versuch nach Beispiel 2 wird wiederholt mit der Änderung, daß der Feststoff mit einer Zentrifuge aus der Reaktionsmischung abgetrennt wird. Man erhält 332 g feuchten Filterkuchen. Nach Temperung bei 230 ^{o}C und Temperzeiten von 30 bzw. 60 bzw. 120 Minuten enthält der trockene Hydrolyserückstand 5,3 Gew.-% bzw. 2,2 Gew.-% bzw. 1,5 Gew.-% Chlorid.

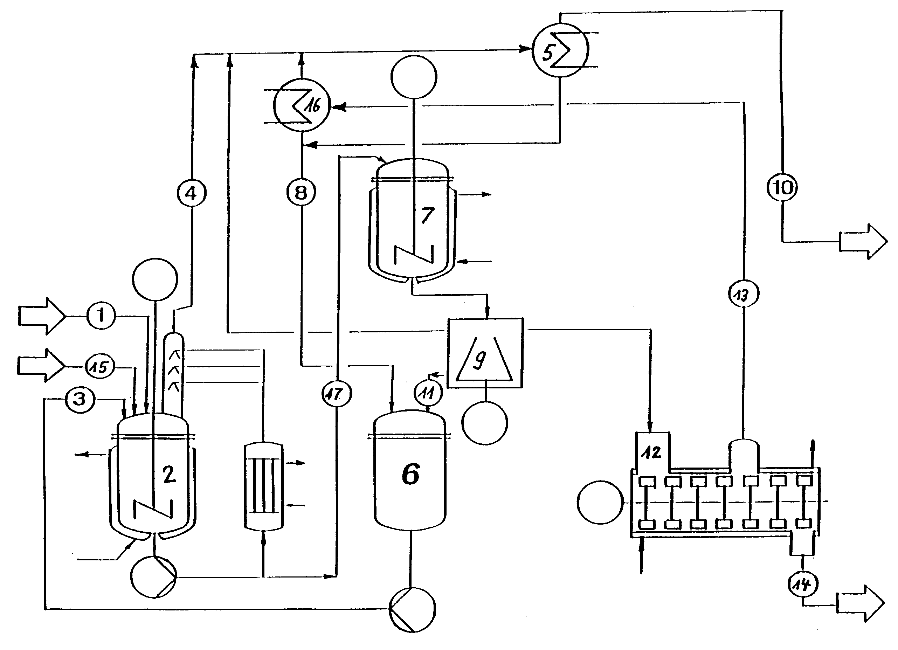

## Patentansprüche

1. Verfahren zur abwasserfreien Aufarbeitung von Rückständen einer Chlorsilandestillation unter Gewinnung von Chlorwasserstoff und deponiefähigem trockenen Abfall, dadurch gekennzeichnet, daß man
a) den Rückstand in flüssiger Salzsäure unter Freisetzung von Chlorwasserstoff reagieren läßt,
b) die gemäß a) entstandene Reaktionsmischung koagulieren läßt,
c) die festen Bestandteile der erhaltenen Reaktionsmischung abtrennt und die verbleibende Flüssigkeit nach a) zurückführt,
d) den in Stufe c) erhaltenen feuchten Feststoff einer Trocknung und Temperung bei einer Temperatur von mindestens 140 ^{o}C unterwirft,
e) die in Stufe d) freigesetzten gasförmigen Bestandteile einem Kondensationssystem zuführt und das Kondensat nach a) zurückleitet.

2. Verfahren nach Anspruch 1, dadurch gekennzeichnet, daß die Temperung bei 300 ^{o}C mindestens 15 Minuten, bei 230 ^{o}C mindestens 30 Minuten und bei 200 ^{o}C mindestens 60 Minuten dauert.

3. Verfahren nach Anspruch 1, dadurch gekennzeichnet, daß das bei der Hydrolyse verbrauchte Wasser in Form von Salzsäure ergänzt wird.
